# EUROPÄISCHE PATENTSCHRIFT

(11) **EP 0 798 101 B1**
(45) Veröffentlichungstag und Bekanntmachung des Hinweises auf die Patenterteilung: **02.01.2002**
(21) Anmeldenummer: 97810026.1
(22) Anmeldetag: 21.01.1997
(51) Int. Cl.: B29C 67/00, B29C 65/14

(54) **Verfahren und Vorrichtung zur Herstellung einer Verdickung an mindestens einer Kante einer Kunststoff-Folie sowie hergestellte Folie**
Method and apparatus for thickening at least one edge of plastic sheeting and produced sheet.
Procédé et appareil pour la fabrication d'un épaississement au bord d'au moins une arête de feuille en matière plastique et feuille fabriquée

(30) Priorität: 29.03.1996 CH 82696
(43) Veröffentlichungstag der Anmeldung: 01.10.1997
(73) Patentinhaber: HAWE NEOS DENTAL Dr. H. V. WEISSENFLUH AG, 6934 Bioggio (CH)
(72) Erfinder: Kilcher, Beat, 6935 Bosco Luganese (CH); von Weissenfluh Beat A., 6925 Gentilino (CH)
(74) Vertreter: AMMANN INGENIEURS-CONSEILS EN PROPRIETE INTELLECTUELLE SA BERNE

(56) Entgegenhaltungen:
- DE-B- 1 216 519
- DE-B- 1 479 841
- DE-B- 1 479 852

## Beschreibung

Die vorliegende Erfindung bezieht sich auf ein Verfahren und Vorrichtung zur Herstellung einer Verdickung an mindestens einer Kante einer Kunststoff-Folie zur Verwendung als Matrize für die Zahnmedizin und auf nach diesem Verfahren hergestellte Matrize.

In der Regel werden Kunststoff-Folien in der Form von Matrizen für die Zahnbehandlung verwendet, die als flache Bänder ausgebildet sind. Für verschiedene Anwendungen ist es jedoch vorteilhaft, wenn diese Bänder entweder an einem Ende oder, zu einem Bogen zusammengefasst an ihrem freien Ende, einen Wulst aufweisen, der als Anschlag dient, falls die Matrize in eine Aufwickel-Vorrichtung oder zwischen zwei benachbarten Zähnen eingeführt wird.

Matrizen mit Anschlägen oder Wülste sind an sich bekannt, doch werden die Wülste entweder durch ein aufgeklebtes Band oder durch Aufkleben eines Folienstreifens hergestellt. Solche Klebeverfahren sind aufwendig und sind oft nicht erwünscht, da neben dem Folienmaterial noch ein weiteres Material verwendet wird.

Aus der DE-B-1 216 519 ist eine Vorrichtung zum Verschweissen der Stirnkanten aufeinanderliegender Lagen von thermoplastischen Material bekannt, wozu gekühlte Pressbacken gehören, damit die Zerreissfestigkeit der geschweissten Folien am Übergang Schweissstelle-Folie nicht erniedrigt wird. Die Pressbacken haben zudem die Aufgabe, die Schweissnähte zusammendrücken, damit diese nicht dicker sind als die Folien.

Aus der DE-B-1 479 852 ist ferner ein Verfahren und Vorrichtung zum Trennen und Schweissen von thermoplastischen Kunststofffolien bekannt, bei der angestrebt wird, saumlose Schweissnähte zu erhalten. Ausserdem fehlt der Vorrichtung eine Kühleinrichtung in der Nähe der Schweissnaht.

Es ist von diesem Stand der Technik ausgehend Aufgabe der vorliegenden Erfindung die Verwendbarkeit einer Matrize für die Zahnmedizin zu verbessern und Verfahren und eine Vorrichtung zur Herstellung einer Verdickung, auch an einer einzelnen Folienkante, anzugeben, bei der die Verdickung einstückig aus dem gleichen Material besteht wie die Folie sowie dieses Verfahren rationell durchzuführen und zu ermöglichen, dass Verdickungen in kontrollierter Grösse hergestellt werden können.

Diese Aufgabe wird mit dem Verfahren gemäss dem unabhängigen Anspruch 1 oder 3 und der Vorrichtung gemäss dem unabhängigen Anspruch 5 gelöst. Weitere Verbesserungen der Verfahren und der Vorrichtung sind in den abhängigen Ansprüchen und nach diesem Verfahren hergestellte Folien in den Ansprüchen 6 und 7 definiert.

Die Erfindung wird im folgenden anhand von Zeichnungen von Ausführungsbeispielen näher erläutert.

Die Figuren 1 bis 3 zeigen schematisch ein Herstellungsverfahren zur Herstellung einer Folie mit einem verdickten Rand, wobei
- Figur 1: eine Seitenansicht der Vorrichtung,
- Figur 2: eine geschnittene Ansicht, und
- Figur 3: eine aufgeklappte Sicht von oben der Vorrichtung
zeigen.

Die Figuren 4 bis 6 zeigen ein zweites Ausführungsbeispiel zur Herstellung einer zusammengeschweissten Folie mit Verdickung der Schweissnaht, wobei

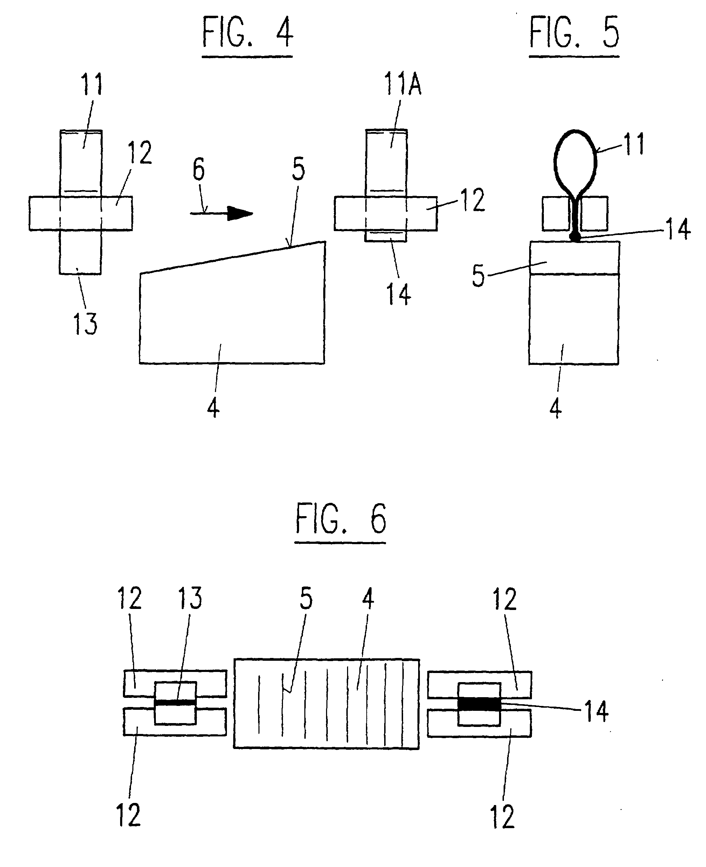

- Figur 4: schematisch die Schweissvorrichtung in Seitenansicht,
- Figur 5: die Vorrichtung von Figur 4 in Vorderansicht, und
- Figur 6: die Vorrichtung von Figur 4 in einer aufgeklappten Sicht von oben zeigen.

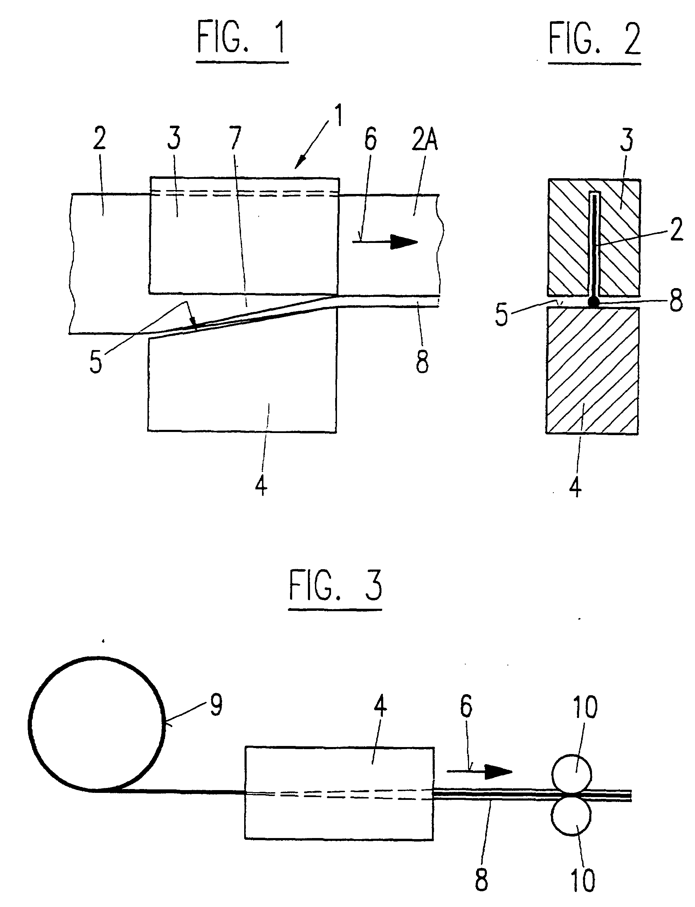

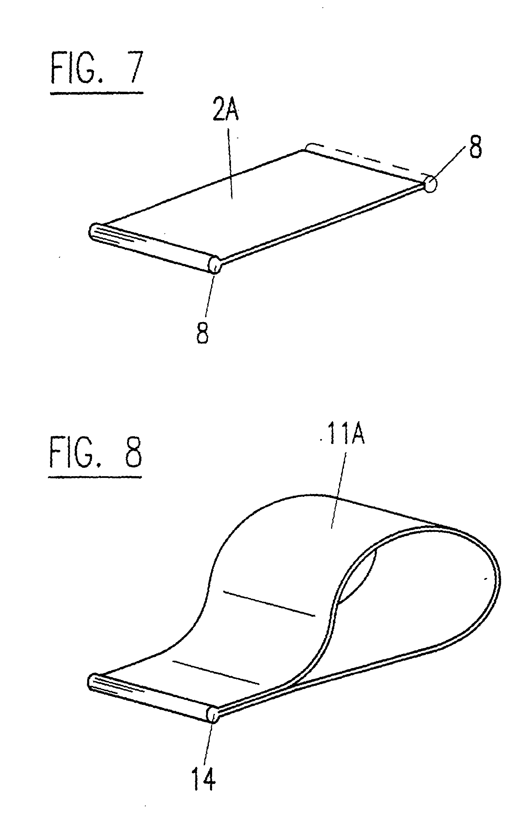

- Figur 7: zeigt eine Folie mit Verdickung, hergestellt nach dem Verfahren gemäss den Figuren 1 bis 3, und
- Figur 8: zeigt eine an zwei Kanten verschweisste Folie, hergestellt nach dem Verfahren gemäss den Figuren 4 bis 6.

In den Figuren 1 bis 3 ist schematisch und stark vereinfacht eine Vorrichtung zur Herstellung einer Verdickung an einer Folie dargestellt. In Figur 1, der Seitenansicht der Vorrichtung 1, erkennt man die Folie 2, links unbehandelt, die in einer Kühl- und Führungs-Vorrichtung 3 geführt wird, wobei sich diese Kühl- und Führungsvorrichtung über einer Wärmestation 4 befindet, deren Oberseite 5 zur Ausgangsseite, siehe Pfeil 6, hin schräg ansteigend verläuft. Aus Figur 1 erkennt man, dass sich die Unterkante 7 der Folie, die aus der Kühl- und Führungsvorrichtung 3 herausragt, infolge der Erwärmung durch die Wärmestation zusammenzieht und einen Wulst 8 bildet, siehe auch Figur 2, wobei der Durchmesser der Verdickung oder des Wulstes hauptsächlich durch die drei Parameter Temperatur der Wärmestation, Durchzug-Geschwindigkeit der Folie und abgeschmolzene Folienbreite in einem weiten Bereich eingestellt werden kann. Ausserdem spielt der Abstand zwischen der Oberseite 5 der Wärmestation und der Unterkante der Folie bei der Bildung der Verdickung eine Rolle und wird als weiterer Parameter zur optimalen Herstellung des Wulstes benutzt.

Verwendet man für eine Kunststoff-Folie beispielsweise eine Folie aus Polyethylenterephtalat (Mylar®) mit einer Dicke von 0,02 bis 0,2 mm, kann ein Wulst mit einem Durchmesser von 0,03 bis 2 mm hergestellt werden. Selbstverständlich sind dies nur Richtwerte. Dabei verhindert die Kühlung in der Kühl- und Führungsvorrichtung das Hinaufwandern des Wulstes in die Folie hinein. Das Verfahren kann bei rel. dünnen Folien sowohl horizontal als auch vertikal durchgeführt werden, wobei bei grossen Wulstdurchmessern von über 1mm die Schwerkraft dazu beiträgt, die Verdickung an der unteren Kante zu halten.

In Figur 3 ist weiterhin schematisch dargestellt, wie die Folie 2 von einer Rolle 9 abgezogen und mittels einer Abzugvorrichtung 10 mit zwei Rollen kontinuierlich durch die Führungs- und Kühlungsvorrichtung gezogen wird.

In Figur 7 ist das fertige Produkt dargestellt, d. h. eine behandelte Folie 2A mit der Verdickung 8, wobei selbstverständlich anstatt einer Mylar®-Folie auch andere Kunststoff-Folien verwendet werden können, und die Verdickung nicht nur an einer Kante, sondern auch an der gegenüberliegenden Kante angebracht werden kann sowie eventuell auch an den anderen Kanten. Um solche Folien als Matrizen zu verwenden, werden diese zu Streifen geschnitten, so dass jeder Streifen einen Wulst oder eventuell auch zwei Wülste aufweist.

Die Figuren 4 bis 6 zeigen eine zweite, stark schematisierte Vorrichtung zur Herstellung einer Folie mit Schweissnaht und Verdickung, siehe Figuren 5 und 8. In dieser Ausführungsvariante erkennt man eine ähnliche Wärmestation 4 mit der abgeschrägten Oberseite 5, während die Folie nicht mehr kontinuierlich durch die Führungs- und Kühlvorrichtung hindurchläuft, sondern die zu einer Schlaufe gefaltete Folie 11 von Halte- und Kühlbacken 12 erfasst wird, derart, dass die beiden zusammengedrückten Seiten 13 der Folie aus den Halte- und Kühlbacken herausragen.

Anschliessend werden die Halte- und Kühlbacken mit der gefalteten Folie über die Wärmestation 4 gezogen, wobei sich, bei geeigneter Temperatur, Abstand von der Wärmestation sowie Geschwindigkeit eine Schweissnaht mit Verdickung 14, siehe Figur 5, bildet. In Figur 8 ist das zusammengeschweisste Band 11A mit der Verdickung 14 dargestellt, die der gebrauchsfertigen Matrize entspricht.

Diese Schlaufen mit verdicktem Ende können als Matrizen verwendet werden, wobei auch hier der grosse Vorteil darin besteht, dass nicht nur dafür ein sehr einfaches und kostengünstiges Verfahren dargestellt worden ist, sondern auch dass der Anschlag, d. h. die Verdickung 14, aus dem gleichen Material besteht wie die Folie.

Auch hier kann, wie vorgehend erläutert, die Folie aus Mylar® bestehen oder aus irgend einem anderen Kunststoff, wobei bei zahntechnischer Anwendung deren Verträglichkeit beachtet werden muss.

## Patentansprüche

1. Verfahren zur Herstellung einer Verdickung an mindestens einer Kante einer Kunststoff-Folie zur Verwendung als Matrize für die Zahnmedizin, **dadurch gekennzeichnet, dass** eine Kante der Folie (2) zwischen einer Kühl- und Führungsvorrichtung (3) und die gegenüberliegende Kante (7) der Folie zur Bildung der Verdickung (8) entlang einer Wärmequelle (4, 5) geführt wird, um diese Kante (7) abzuschmelzen, wobei der Durchmesser der Verdickung (8) durch Einstellung der Temperatur der Wärmequelle, der abgeschmolzenen Folienbreite sowie der Durchführungs-Geschwindigkeit bestimmt wird.

2. Verfahren nach Anspruch 1, **dadurch gekennzeichnet, dass** die unbehandelte Folie (2) von einer Rolle (9) abgezogen und mittels einer Abzugsvorrichtung (10) kontinuierlich durch die Kühl- und Führungsvorrichtung (3) gezogen wird.

3. Verfahren zur Herstellung einer Verdickung an einer Kante einer Kunststoff-Folie zur Verwendung als Matrize für die Zahnmedizin, **dadurch gekennzeichnet, dass** zwei gegenüberliegende Kanten (13) einer Folie (11) vereint werden, die zu einer Schlaufe zusammengefaltete Folie von einer Kühl- und Haltevorrichtung (3; 12) erfasst und mit den Kanten (13) zur Bildung der Verdickung (14) entlang einer Wärmequelle (4, 5) geführt wird, um diese Kanten (13) abzuschmelzen, wobei der Durchmesser der Verdickung (14) durch Einstellung der Temperatur der Wärmequelle, der abgeschmolzenen Folienbreite sowie der Durchführungs-Geschwindigkeit bestimmt wird.

4. Verfahren nach einem der Ansprüche 1 bis 3, **dadurch gekennzeichnet, dass** eine Folie aus Polyethylenterephtalat verwendet wird.

5. Vorrichtung zur Durchführung des Verfahrens nach den Ansprüchen 1 bis 4, mit einer Kühl- und Führungs- bzw. Haltevorrichtung (3; 12) und einer davon beabstandeten Wärmequelle (4, 5), wobei der Abstand der der Kühl- und Führungs- bzw. Haltevorrichtung (3; 12) zugekehrten Seite (5) der Wärmequelle (4) zur gegenüberliegenden Kante der Kühl- und Führungs, bzw. Haltevorrichtung in Durchlaufrichtung der Folie abnimmt.

6. Folie zur Verwendung als Matrize für die Zahnmedizin, hergestellt nach dem Verfahren gemäss einem der Ansprüche 1, 2 oder 4, **dadurch gekennzeichnet, dass** mindestens eine Kante (7) eine einstückig aus dem gleichen Material wie die Folie hergestellte Verdickung (8) aufweist.

7. Folie zur Verwendung als Matrize für die Zahnmedizin, hergestellt nach dem Verfahren gemäss den Ansprüchen 3 und 4, **dadurch gekennzeichnet, dass** sie zwei miteinander verschweisste Kanten (13) mit einer einstückig hergestellten Verdickung (14) aus dem gleichen Material wie die Folie aufweist.

## Claims

1. Method for producing a thickening on at least one edge of a plastics foil for use as a matrix for dentistry, **characterised in that** one edge of the foil (2) is guided in a cooling and guiding device (3) and the opposite edge (7) is guided along a source of heat (4, 5) to melt off that edge (7) in order to form the thickening (8), the diameter of the thickening (8) being determined by adjusting the temperature of the heat source, the width of the melted foil portion, and the passing speed.

2. Method according to claim 1, **characterised in that** the untreated foil (2) is drawn off from a reel (9) and continuously pulled through the cooling and guiding device (3) by an unwinding device (10).

3. Method for producing a thickening on an edge of a plastics foil for use as a matrix for dentistry, **characterised in that** two opposite edges (13) of a foil (11) are united, the loop formed by the folded foil is seized by a cooling and holding device (3; 12), and its edges (13) are guided along a source of heat (4, 5) to melt off those edges (13), the diameter of the thickening (14) being determined by adjusting the temperature of the heat source, the width of the melted foil portion, and the passing speed.

4. Method according to any one of claims 1 to 3, **characterised in that** a foil of polyethyleneterephtalate is used.

5. Device for carrying out the method according to claims 1 to 4, comprising a cooling and guiding resp. holding device (3; 12) and a source of heat (4, 5) disposed at a distance therefrom, the distance between the side (5) of the heat source (4) facing the guiding resp. holding device (3; 12) and the opposed edge of the cooling and guiding resp. holding device decreasing in the passing direction of the foil.

6. Foil for use as a matrix for dentistry, produced by the method according to any one of claims 1, 2, or 4, **characterised in that** at least one edge (7) thereof comprises a thickening (8) made in one piece of the same material as the foil.

7. Foil for use as a matrix for dentistry, produced by the method according to claims 3 and 4, **characterised in that** two edges (13) thereof are welded together and comprise a thickening (14) made in one piece of the same material as the foil.

## Revendications

1. Procédé pour la production d'un renflement à l'une au moins des arêtes d'une feuille en matière synthétique destinée à servir de matrice pour la médecine dentaire, **caractérisé en ce que** l'une des arêtes de la feuille (2) est guidée dans un dispositif (3) de refroidissement et de guidage, et l'arête opposée (7) de la feuille est guidée le long d'une source de chaleur afin de fondre ladite arête (7) pour former ledit renflement (8), le diamètre du renflement (8) étant déterminé en réglant la température de la source de chaleur, la largeur de la partie fondue de la feuille et la vitesse de passage.

2. Procédé selon la revendication 2, **caractérisé en ce que** la feuille non traitée (2) est déroulée d'une bobine (9) et passée de manière continue par ledit dispositif (3) de refroidissement et de guidage au moyen d'un dévidoir (10).

3. Procédé de production d'un renflement à l'arête d'une feuille en matière synthétique destinée à servir de matrice pour la médecine dentaire, **caractérisé en ce que** deux arêtes (13) opposées d'une feuille (11) sont réunies, et que la feuille pliée en boucle est saisie par un dispositif (3; 12) de refroidissement et de retenue et guidée le long d'une source de chaleur afin de fondre lesdites arêtes (13) pour former ledit renflement (14), le diamètre du renflement (14) étant déterminé en réglant la température de la source de chaleur, la largeur de la partie fondue de la feuille et la vitesse de passage.

4. Procédé selon l'une des revendications 1 à 3, **caractérisé en ce qu'**une feuille en polyéthylènetéréphtalate est utilisée.

5. Dispositif pour la mise en oeuvre du procédé selon les revendications 1 à 4, comprenant un dispositif (3; 12) de refroidissement et de guidage resp. de retenue et une source de chaleur (4, 5) écartée de celui-ci, la distance entre le côté (5) de la source de chaleur (4) en regard du dispositif (3; 12) de refroidissement et de guidage resp. de retenue et l'arête y opposée du dispositif de refroidissement et de guidage resp. de retenue diminuant dans la direction de passage de la feuille.

6. Feuille destinée à servir de matrice pour la médecine dentaire, produite par le procédé selon l'une des revendications 1, 2 ou 4, **caractérisée en ce que** l'une des arêtes (7) au moins présente un renflement (8) fait d'une pièce du même matériau que la feuille.

7. Feuille destinée à servir de matrice pour la médecine dentaire, produite par le procédé selon les revendications 3 et 4, **caractérisée en ce qu'**elle présente deux arêtes (13) soudées ensemble avec un renflement (14) fait d'une pièce du même matériau que la feuille.
